# EUROPEAN PATENT APPLICATION

(11) **EP 4 589 567 A2**
(43) Date of publication of application: **23.07.2025**
(21) Application number: 24223270.0
(22) Date of filing: 24.12.2024
(51) Int. Cl.: G08G 5/21, G08G 5/51, G08G 5/55, G08G 5/56, G08G 5/80

(54) **SYSTEMS AND METHODS FOR AIRCRAFT GROUND COLLISION AVOIDANCE**

(30) Priority: 16.01.2024 US 202418413471
(71) Applicant: Honeywell International Inc., Charlotte, NC 28202 (US)
(72) Inventor: LIU, Yufeng, Charlotte, 28202 (US); HE, Gang, Charlotte, 28202 (US)
(74) Representative: LKGlobal UK Ltd.

(57) **Abstract**

An aircraft ground collision avoidance system is disclosed. A current first aircraft position, a current first aircraft speed, and a current first aircraft heading of a first aircraft is generated based on aircraft sensor data received from an aircraft sensor system. First taxi route data for the first aircraft is received from air traffic control (ATC) via an aircraft communication system. A first airport travel pathway of the first aircraft is predicted based on the current first aircraft position, the current first aircraft speed, the current first aircraft heading, and the first taxi route data. A determination is made regarding whether there is an intersection between the first airport travel pathway of the first aircraft and a position of an obstacle. The intersection defines a potential collision point. A potential collision alert is generated for display on a display device of the first aircraft based on the determination.

## Description

### TECHNICAL FIELD

Embodiments of the subject matter described herein relate generally to aircraft systems. More particularly, embodiments of the subject matter relate to aircraft ground collision avoidance systems.

### BACKGROUND

Pilots often have difficulty seeing the wingtips of an aircraft while the aircraft is taxiing on an airport surface and judging clearances between the aircraft and obstacles. Examples of obstacles include, but are not limited to, buildings, other aircraft, ground vehicles, and poles. Growth in air traffic has led to an increased risk of potential airport ground collisions. Aircraft ground collisions with an obstacle may result in damage to the aircraft, place the aircraft out of service, and/or impact an associated airline reputation.

In many instances, taxiways at an airport are not always linear and may include curved sections. A taxiway may intersect other taxiways. Attempting to predict a collision risk of the aircraft with another aircraft based solely on the heading and the ground speed of the two aircraft may not provide an accurate prediction of a potential collision. Inaccurate predictions of potential collisions may lead to the generation of nuisance potential collision alerts.

For example, a first aircraft may be traveling on a first taxiway and a second aircraft may be traveling on a second taxiway where there is no intersection between the first taxiway and the second taxiway and there is no risk of a potential collision between the first and second aircraft. An assessment based solely of the heading and the ground speed of the first and second aircraft may lead to a prediction of a potential collision risk between the first and second aircraft, if one or both of the aircraft are traveling on curved sections of their taxiways and a nuisance collision alert would be generated. If a collision avoidance system generates too many nuisance potential collision alerts, pilots may be less likely to pay attention to the potential collision alerts and may even ignore them. As a result, a pilot may inadvertently ignore a true potential collision alert associated with a true potential collision risk.

Hence, it is desirable to provide an aircraft ground collision avoidance system that is less likely to generate nuisance potential collision alerts. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, an aircraft ground collision avoidance system includes an aircraft sensor system of a first aircraft configured to generate aircraft sensor data; a communication system of the first aircraft; a display device of the first aircraft and a controller of the first aircraft configured to be communicatively coupled to the sensor system, the communication system, and the display device. The controller is configured to: generate a current first aircraft position, a current first aircraft speed, and a current first aircraft heading based on the aircraft sensor data received from the aircraft sensor system; receive first taxi route data for the first aircraft from air traffic control (ATC) via the communication system; predict a first airport travel pathway of the first aircraft based on the current first aircraft position, the current first aircraft speed, the current first aircraft heading, and the first taxi route data; determine whether there is an intersection between the first airport travel pathway of the first aircraft and a position of an obstacle, the intersection defining a potential collision point; and generate a potential collision alert for display on the display device based on the determination.

In various embodiments, a method of avoiding aircraft ground collision includes: generating a current first aircraft position, a current first aircraft speed, and a current first aircraft heading of a first aircraft based on aircraft sensor data received from an aircraft sensor system; receiving first taxi route data for the first aircraft from air traffic control (ATC) via an aircraft communication system; predicting a first airport travel pathway of the first aircraft based on the current first aircraft position, the current first aircraft speed, the current first aircraft heading, and the first taxi route data; determining whether there is an intersection between the first airport travel pathway of the first aircraft and a position of an obstacle, the intersection defining a potential collision point; and generating a potential collision alert for display on a display device of the first aircraft based on the determination.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a block diagram representation of an exemplary aircraft ground collision avoidance system in accordance with at least one embodiment;
FIG. 2 is a flowchart representation of a method of implementing an aircraft ground collision avoidance system in accordance with at least one embodiment;
FIG. 3 is a display including an exemplary airport travel pathway of the aircraft based on the taxi route data in Table 1 in accordance with at least one embodiment;
FIG. 4 is a diagrammatic representation of an exemplary guideline, a measured aircraft position A of the aircraft, and a measured aircraft position B of the aircraft in accordance with at least one embodiment;
FIG. 5 is a diagrammatic representation of a set of exemplary historical aircraft taxi operation data in accordance with at least one embodiment;
FIG 6 is a diagrammatic representation of an exemplary protection zone around an aircraft in accordance with at least one embodiment;
FIG. 7 is a diagrammatic representation of an exemplary airport database polygon area used to calculate taxiway width in accordance with at least one embodiment;
FIG. 8 is diagrammatic representation of an exemplary implementation of position filtering when projecting a measured aircraft position onto a guideline while making maneuver path predictions in accordance with at least one embodiment;
FIG. 9 is a diagrammatic representation of exemplary predicted positions of aircraft A and aircraft B along associated airport travel pathways where there is no risk of a potential collision in accordance with at least one embodiment; and
FIG. 10 is a diagrammatic representation of exemplary predicted positions of aircraft A and aircraft B along associated airport travel pathways where there is a risk of a potential collision in accordance with at least one embodiment.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

The subject matter described herein discloses apparatus, systems, techniques and articles for an aircraft ground collision avoidance system. The apparatus, systems, techniques and articles provided herein can make use of an airport moving map database to correct aircraft and object position and/or path for predicting possible alert situations. The apparatus, systems, techniques and articles provided herein can make use of an airport moving map database to identify a potential nuisance alert event based on surface operation rules and airport geometry, so that, for example, two aircraft moving on two independent taxiways do not lead to an alert condition.

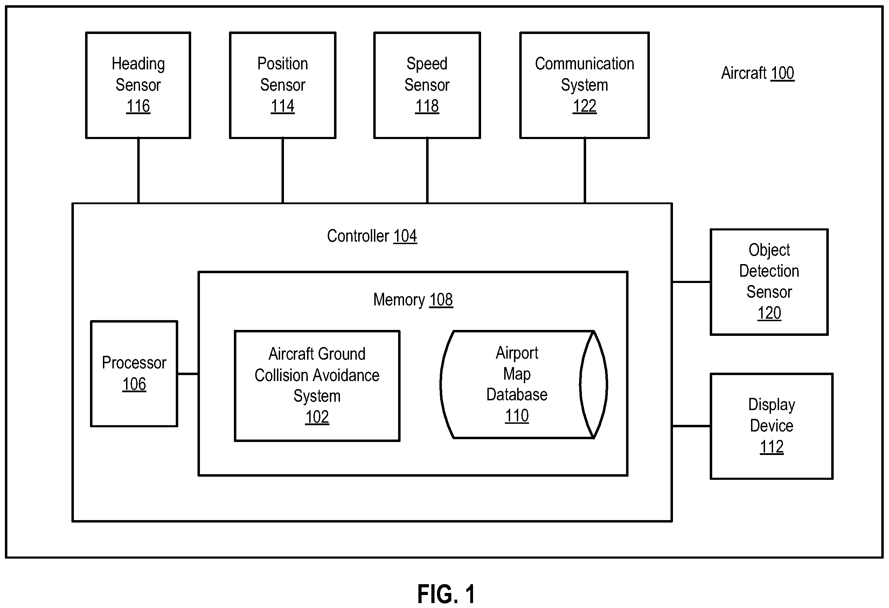

Referring to FIG. 1, a block diagram representation of an aircraft 100 including an aircraft ground collision avoidance system 102 in accordance with at least one embodiment is shown. The aircraft 100 includes a controller 104. The controller 104 includes at least one processor 106 and at least one memory 108. In at least one embodiment, the at least one memory is computer readable media. The at least one memory 108 includes the aircraft ground collision avoidance system 102 and an airport map database 110. In at least one embodiment, the airport map database 110 is a component of the aircraft ground collision avoidance system 102. In at least one embodiment, the airport map database 110 is an airport moving map database 110. In at least one embodiment, the airport map database 110 is a separate from the aircraft ground collision avoidance system 102. The airport map database 110 include coordinates of airport elements. In various embodiments, the aircraft 100 includes at least one display device 112, at least one position sensor 114, at least one heading sensor 116, at least one speed sensor 118, at least one object detection sensor 120, and a communication system 112. The aircraft 100 includes additional components that facilitate operation of the aircraft 100.

The processor 106 may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The at least one memory 108 (also referred to as computer readable storage device or computer readable media) may include volatile and nonvolatile storage in read-only memory (ROM), random-access memory (RAM), and keep-alive memory (KAM), for example. KAM is a persistent or non-volatile memory that may be used to store various operating variables while the processor is powered down. The at least one memory 108 may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, executable by the at least one processor 106.

The display device(s) 112 is configured to display an airport map display. The airport map display may include, one or more of, runways, taxiways, and terminal buildings at an airport. The airport map display may include a symbol for the aircraft 100 and a symbol for one or more detected potential obstacles. The aircraft ground collision avoidance system 102 is configured to generate potential collision alerts for display on the display device(s) 112.

The position sensor(s) 114 is configured to measure aircraft position, such as for example, latitude, longitude, and altitude. The position sensor(s) 114 may be implemented using aircraft systems such as a GPS (Global Positioning System) and/or an IRS (Inertial Reference System). The heading sensor(s) 116 is configured to measure aircraft heading. The aircraft heading includes the aircraft heading when the aircraft 100 is traveling on the ground. The heading sensor(s) 116 may be implemented using aircraft systems such as a GPS, an IRS, an AHRS (attitude and heading reference system), and/or magnetometer. The speed sensor(s) 118 is configured to measure aircraft speed. The aircraft speed includes an aircraft ground speed. The speed sensor(s) 118 may be implemented using aircraft systems such as a GPS, an IRS, and/or an ADS (air data system).

The object detection sensor(s) 120 is configured to detect potential obstacles in an airport travel pathway of the aircraft 100 and to detect information associated with characterizing the potential obstacles such as position, heading, ground speed, and size of the potential obstacles. The object detection sensor(s) 120 is configured to detect both dynamic obstacles (*e.g.*, ground vehicle or other aircraft) and static obstacles (*e.g.,* buildings, poles, etc.) The object detections sensor(s) 120 may be implemented using aircraft systems such as ADS-B (Automatic Dependent Surveillance Broadcast), radar, and others.

The communications system 122 is configured to provide real-time bidirectional wired and/or wireless data exchange for the controller 104 to communicate with the external sources (including, each of traffic, air traffic control (ATC), satellite weather sources, ground stations, and the like). In various embodiments, the communications system 122 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications system 122 is integrated within the controller 104, and in other embodiments, the communications system 122 is external to the controller 104.

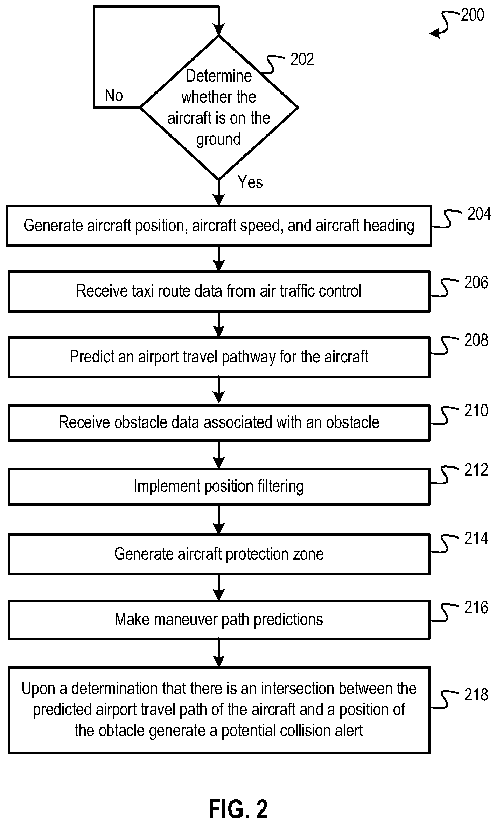

Referring to FIG. 2, a flowchart representation of a method 200 of implementing an aircraft ground collision avoidance system 102 in accordance with at least one embodiment is shown. As can be appreciated in light of the disclosure, the order of operation within the method 200 is not limited to the sequential execution as illustrated in FIG. 2 but may be performed in one or more varying orders as applicable and in accordance with the present disclosure.

At 202, the aircraft ground collision avoidance system 102 determines whether the aircraft 100 is on the ground. In various embodiments, the aircraft ground collision avoidance system 102 is configured to use onboard avionics parameters such as WOW (Weight on Wheel), airspeed, and/or altitude to determine whether the aircraft 100 is on the ground or in the air. For example, when the WOW state is true, the aircraft airspeed is below a configurable threshold (*e.g.,* 80 knots), and the current altitude is the same as or close to the airport elevation, the aircraft ground collision avoidance system 102 determines that the aircraft 100 is on the ground. If the aircraft ground collision avoidance system 102 determines that that the aircraft is not on the ground, the method 200 repeats 202. If the aircraft ground collision avoidance system 102 determines that that the aircraft 100 is on the ground, the method 200 proceeds to 204.

At 204, the aircraft ground collision avoidance system 102 generates a current aircraft position, an aircraft speed, and an aircraft heading of the aircraft 100 based on aircraft sensor data received from the aircraft sensor system. The aircraft sensor system includes the position sensor(s) 114, the heading sensor(s) 116, and the speed sensor(s) 118. The current aircraft position is a current latitude and current longitude. The aircraft speed is a ground speed. In various embodiments, the aircraft ground collision avoidance system 102 is configured to generate one or more of a current altitude, and dimension data for the aircraft 100.

At 206, the aircraft ground collision avoidance system 102 receives taxi route data from air traffic control (ATC) via the communication system 122. In at least one embodiment, the taxi route data includes at least two airport elements. Element identifiers for each of the airport elements are included in the taxi route data. In at least one embodiment, the aircraft ground collision avoidance system 102 receives a text message including the taxi route data from ATC via the communication system 122. In at least one embodiment, the aircraft ground collision avoidance system 102 receives an audio message including the taxi route data from ATC via the communication system 122. The received audio message is transcribed into a text message. The taxi route data includes two or more airport elements.

At 208, the aircraft ground collision avoidance system 102 predicts an airport travel pathway for the aircraft 100 based on the taxi route data. In various embodiments, the aircraft ground collision avoidance system 102 predicts the airport travel pathway based on the current aircraft position, the aircraft speed, the aircraft heading, and the taxi route data. The airport map database 110 is configured to store coordinate data and an element identifier for each of a plurality of airport elements at the airport. The aircraft ground collision avoidance system 102 is configured to identify the element identifiers in the text message and retrieve the coordinate data associated with each of the element identifiers from the airport map database 110. The aircraft ground collision avoidance system 102 is configured to predict the airport travel pathway including one or more the taxi routes based on retrieved the coordinate data associated with the two or more airport elements.

The aircraft ground collision avoidance system 102 receives the taxi route data issued by a ground ATC controller. The taxi route data can be issued via either audio communication or datalink. In various embodiments, the aircraft ground collision avoidance system 102 hosts a voice recognition engine, an interpretation engine, and a taxi route generation engine. The voice recognition engine is configured to transcribe an audio message including the taxi route data to a text message. For example, "United Airline one two three, runway zero eight, taxi from Charlie eleven via taxiway Bravo and Bravo one" received via an audio message is transcribed to a text message by the voice recognition engine. The transcribed text message is transmitted from the voice recognition engine to the interpretation engine for further processing.

The taxi route data can also be received in a datalink message (D-TAXI). The datalink message is a text message. In such cases, there is no need to use the voice recognition engine. The D-TAXI message (text message) is directly transmitted to the interpretation engine for further processing.

The interpretation engine receives the text message as an input and extracts the taxi route data. The interpretation engine employs intelligent methods, such as for example, natural language processing or regular expression, to extract the taxi route data. In the above, example, the taxi route data includes starting point parking stand Charlie eleven, taxiway route segments Bravo and Bravo One, and the destination of runway zero eight. The interpretation engine may also translate the taxi route data into a pre-defined interface to the taxi route generation system as shown in Table 1 below. The interpretation engine transmits the taxi route data to the taxi route generation engine.

**Table 1: Taxi Route Interface**

| Element | Element Type | Element ID |
|---|---|---|
| Start point | Parking stand | C11 |
| Route segment | Taxiway | B |
| Route segment | Taxiway | B1 |
| Destination | Runway | 08 |

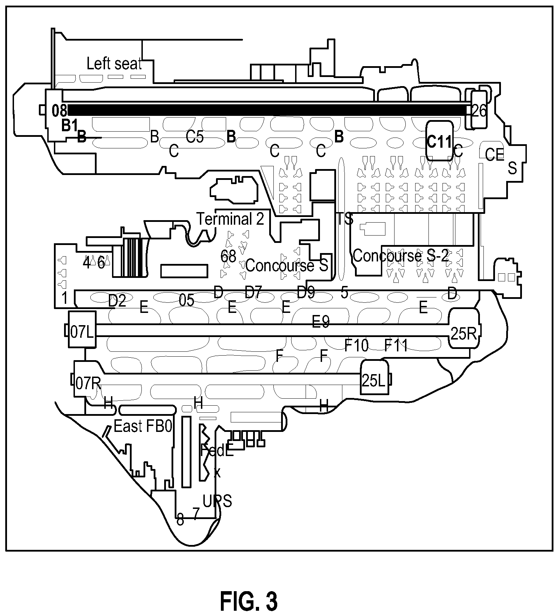

The taxi route generation engine receives the taxi route data as an input and searches for each element in the airport map database 110 using the element identifier and connects all of the airport elements in a sequence to predict the airport travel pathway for the aircraft 100. The aircraft ground collision avoidance system 102 is configured to transmit the predicted airport travel pathway for the aircraft 100 to the display device 112 of the aircraft 100 for rendering and display. Referring to FIG. 3, a display including an exemplary airport travel pathway of the aircraft 100 based on the taxi route data in Table 1 in accordance with at least one embodiment is shown. The airport travel pathway is shown in black. The airport travel pathway begins at the parking stand C11, continues onto taxiway segment B and taxiway segment B1 to arrive at the destination runway 08.

In at least one embodiment, the airport map database 110 is configured to store coordinate data and an element identifier for each of a plurality of airport elements, and the aircraft ground collision avoidance system 102 is configured to: receive a text message including the taxi route data from the ATC via the communication system 122, the taxi route data including at least two airport elements; identify an element identifier for each of the at least two airport elements; retrieve coordinate data associated with each of the at least two airport elements from the airport map database 110 using the element identifiers for each of the at least two airport elements; generate one or more taxi routes based on the coordinate data associated with each of the at least two airport elements; and predict the airport travel pathway for the aircraft 100 based on the one or more taxi routes.

In at least one embodiment, the airport map database 110 is configured to store coordinate data and an element identifier for each of a plurality of airport elements, and the aircraft ground collision avoidance system 102 is configured to: receive an audio message including the taxi route data from the ATC via the communication system 122, the taxi route data including at least two airport elements; transcribe the audio message into a text message; identify an element identifier for each of the at least two airport elements; retrieve coordinate data associated with each of the at least two airport elements from the airport map database 110 using the element identifiers for each of the at least two airport elements; generate one or more taxi routes based on the coordinate data associated with each of the at least two airport elements; and predict the airport travel pathway for the aircraft 100 based on the one or more taxi routes.

At 210, the aircraft ground collision avoidance system 102 receives obstacle data associated with an obstacle. In at least one embodiment, the obstacle is a static obstacle. Examples of static obstacles include, but are not limited to, terminal buildings and poles. The airport map database 110 is configured to store coordinate data for a plurality of static obstacles on the airport ground surface. The aircraft ground collision avoidance system 102 is configured to generate a position of a static obstacle based on coordinate data retrieved from the airport map database 110. In at least one embodiment, the aircraft ground collision avoidance system 102 generates the position of the obstacle based on coordinate data retrieved from the airport map database 110, where the coordinate data is in close proximity to the predicted airport travel pathway of the aircraft 100. The position of the obstacle is the position of the static obstacle.

In at least one embodiment, the obstacle is a dynamic obstacle. Examples of dynamic obstacles include, but are not limited to, other aircraft and ground vehicles. The aircraft ground collision avoidance system 102 receives obstacle data from the object detection sensor(s) 120. Examples of obstacle data include, but are not limited to, latitude, longitude, altitude, ground speed, heading, and dimensions of the obstacle. Examples of obstacle detection sensor(s) 120 include, but are not limited to, radar, Lidar, camera, ultrasound sensor, and an Automatic Dependent Surveillance-Broadcast (ADS-B) receiver. The aircraft ground collision avoidance system 102 identifies a current obstacle position, an obstacle speed, and an obstacle heading of the dynamic object based on the obstacle data. In at least one embodiment, the aircraft ground collision avoidance system 102 receives taxi route data for the dynamic obstacle. When the dynamic obstacle is another aircraft, the aircraft ground collision avoidance system 102 receives the taxi route data for the dynamic obstacle from ATC via the communication system 122. The aircraft ground collision avoidance system 102 predicts an airport travel pathway for the dynamic obstacle based on the current obstacle position, the obstacle speed, the obstacle heading, and the taxi route data associated with the obstacle.

At 212, the aircraft ground collision avoidance system 102 implements position filtering. The predicted airport travel pathway for the aircraft 100 includes taxi routes at the airport. Each of the taxi routes is associated with a guideline. The guidelines are typically painted on the surface of taxiways and in the ramp areas at airports. Typically, pilots attempt to maintain the aircraft main gear on the guideline as closely as possible while the aircraft 100 moves on the airport surface. The airport map database 110 is configured to store coordinate data for each of the guidelines associated with each of the taxi routes at the airport.

Position measurements obtained from position sensors 114 onboard the aircraft 100 may provide an aircraft position that deviates away from a guideline even when an aircraft 100 actually taxis along the guideline. This may occur because the position sensors 114 themselves may have a measurement error, especially widely used GPS sensors, which suffer from multipath interference when used on the ground. The aircraft ground collision avoidance system 102 is configured to correct the measured aircraft position with respect to the guideline through position filtering.

In at least one embodiment, the airport map database 100 includes coordinate data for key elements at the airport, such as runways, taxiways, guidelines, terminals, aprons, etc. The aircraft ground collision avoidance system 102 is configured to obtain the measured aircraft position and then find the nearest point on the guideline to the measured aircraft position based on coordinate data retrieved from the airport map database 110 for that guideline. If the perpendicular distance from the measured aircraft position to the nearest guideline is less than a configurable threshold distance, the measured aircraft position will be corrected, by the aircraft ground collision avoidance system 102, to the nearest point on the guideline.

In at least one embodiment, the aircraft ground collision avoidance system 102 is configured to retrieve the coordinate data of the guidelines associated with the taxi routes of the predicted travel pathway of the aircraft 100 using the taxi route data for each of the taxi routes from the airport map database 110. The aircraft ground collision avoidance system 102 is configured to define guidelines for each of the first taxi routes based on the coordinate data of the guidelines associated with the taxi routes. The aircraft ground collision avoidance system 102 is configured to refine the airport travel pathway of the aircraft 100 by estimating a series of future positions of the aircraft 100. The aircraft ground collision avoidance system 102 is configured to estimate a next future position of the aircraft 100 based on a previously estimated position of the aircraft 100, the aircraft speed, and the aircraft heading. The aircraft ground collision avoidance system 102 is configured to adjust the next estimated future position of the aircraft 100 to a nearest coordinate on the guideline when the nearest coordinate is less than a threshold distance away from the estimated next future position. The aircraft ground collision avoidance system 102 is configured to generate corrected positions of airport travel pathway of the aircraft 100 with respect to the guidelines to define the refined airport travel pathway of the aircraft 100. In various embodiments, the position measurements for the aircraft 100 along each of the taxi routes of the predicted airport travel pathway with respect to associated guidelines is based on the coordinate data retrieved from an airport map database 110 and historical aircraft taxi operation data. In at least one embodiment, the threshold distance is based on statistics relating to historical aircraft operation data along the taxi routes.

In at least one embodiment, the aircraft ground collision avoidance system 102 is configured to retrieve the coordinate data of the guidelines associated with the taxi routes of the predicted travel pathway of a dynamic obstacle using the taxi route data for each of the taxi routes from the airport map database 110. In at least one embodiment, the dynamic obstacle is another aircraft. The aircraft ground collision avoidance system 102 is configured to define guidelines for each of the taxi routes based on the coordinate data of the guidelines associated with the taxi routes. The aircraft ground collision avoidance system 102 is configured to refine the airport travel pathway of the dynamic obstacle by estimating a series of future positions of the dynamic obstacle. The aircraft ground collision avoidance system 102 is configured to estimate a next future position of the dynamic obstacle based on a previously estimated position of the dynamic obstacle, the obstacle speed, and the obstacle heading. The aircraft ground collision avoidance system 102 is configured to adjust the next estimated future position of the dynamic obstacle to a nearest coordinate on the guideline when the nearest coordinate is less than a threshold distance away from the estimated next future position. The aircraft ground collision avoidance system 102 is configured to generate corrected positions of the airport travel pathway of the dynamic obstacle with respect to the guidelines to define the refined airport travel pathway of the dynamic obstacle. In various embodiments, the position measurements for the aircraft 100 along each of the taxi routes of the predicted airport travel pathway with respect to associated guidelines is based on the coordinate data retrieved from an airport map database 110 and historical aircraft taxi operation data. In at least one embodiment, the threshold distance is based on statistics relating to historical aircraft taxi operation data along the taxi routes.

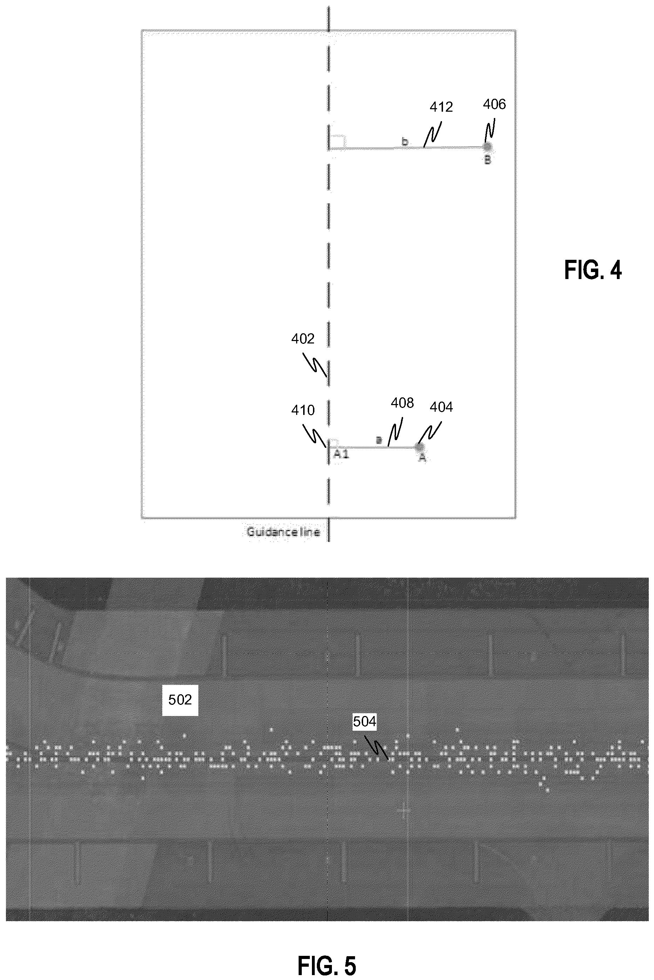

Referring to FIG. 4, a diagrammatic representation of an exemplary guideline 402, a measured aircraft position A 404 of the aircraft 100, and a measured aircraft position B 406 of the aircraft 100 in accordance with at least one embodiment is shown. Since the perpendicular distance 408 from measured aircraft position A 404 to the nearest point A1 410 on the guidance line 402 is less than a threshold distance, the measured position is corrected to point A1 410 on the guideline 402. Since the distance b 412 from the measured aircraft position B 406 to the nearest point on the guideline 402 is greater than the threshold distance, the measured position B 406 is not corrected to a point on the guide line 402.

Referring to FIG. 5, a diagrammatic representation of a set of exemplary historical aircraft taxi operation data in accordance with at least one embodiment is shown. The threshold distance during the implementation of position filtering can be determined based on statistics relating to historical aircraft taxi operation data. Each dot represents a measured aircraft position on a taxiway 502 when the aircraft 100 taxies along a guidance line 504 on the taxiway 502. By measuring the distance from each measured position of the aircraft 100 to the closest point on the guideline 504 and analyzing large amounts of the measured distance data, the threshold distance can be determined based on a selected confidence level (*e.g.,* 95%). The threshold distance may be different in different areas of the airport due to variant interference level. For example, the threshold distance may be 3 meters on a taxiway and may be 6.5 meters in a ramp area.

The threshold distance can be determined based on statistics relating to historical taxi operation data on an airport surface. The threshold distance is configurable for different airport surfaces, and the aircraft ground collision avoidance system 102 selects a corresponding threshold distance based on a measured aircraft position of the aircraft 100. For example, when the aircraft 100 is on a taxiway, the aircraft ground collision avoidance system 102 selects a smaller threshold distance (*e.g*., 3 meters), and when the aircraft 100 is in a ramp area, the aircraft ground collision avoidance system 102 selects a relatively larger threshold distance (*e.g*. 6.5 meters).

Referring back to FIG. 2, at 214, the aircraft ground collision avoidance system 102 generates an aircraft protection zone for the aircraft 100. The aircraft ground collision avoidance system 102 generates the aircraft protection zone around the corrected aircraft position (obtained through position filtering) of the aircraft 100. In at least one embodiment, when the obstacle is a dynamic obstacle and the dynamic obstacle is another aircraft (obstacle aircraft), the aircraft ground collision avoidance system 102 generates an aircraft protection zone around the corrected aircraft position (obtained through position filtering) of the obstacle aircraft.

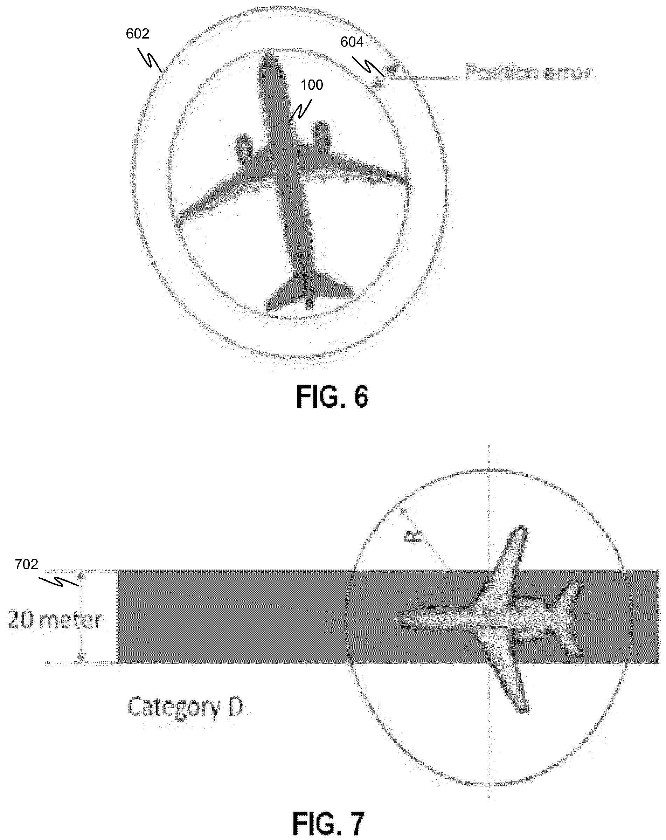

In at least one embodiment, the aircraft protection zone has an elliptical shape with its center point at the corrected aircraft position. As described with respect to FIG. 4, the corrected aircraft position is at point A1 410 on the guideline 402. Referring to FIG. 6, a diagrammatic representation of an exemplary protection zone 602 around an aircraft 100 in accordance with at least one embodiment is shown. The protection zone 602 around the aircraft 100 has an elliptical shape. The longitudinal axis of the elliptical shape covers the aircraft length plus a position error 604. The lateral axis of the elliptical shape covers the aircraft wingspan plus the position error 604. In at least one embodiment, the position error 604 is set to be the same value as the threshold distance discussed above with regard to position filtering.

In at least one embodiment, a look up table is stored in memory 108 onboard the aircraft 100 for the aircraft ground collision avoidance system 102 to use to obtain the aircraft length and wingspan information for the aircraft 100, as illustrated in the Table 2 below. The look up table stores the wingspan information and the aircraft lengths for different aircraft types.

**Table 2: Aircraft Look Up Table**

| Aircraft Type | Type Code | WingSpan (m) | Length (m) |
|---|---|---|---|
| A300-600 | A306 | 44.84 | 54.08 |
| A300 | A30B | 44.83 | 53.61 |
| A310 | A310 | 43.9 | 46.66 |
| A318 | A318 | 34.10 | 31.44 |
| A319 | A319 | 35.8 | 33.84 |
| A320 | A320 | 35.8 | 37.57 |
| A321 | A321 | 35.8 | 44.51 |
| ...... | ...... | ...... | ...... |

The aircraft ground collision avoidance system 102 is configured to look up the aircraft length and the wingspan information for the aircraft 100 based on the aircraft type of the aircraft 100.

For traffic aircraft (obstacle aircraft), a look up table associates Mode S ID to aircraft type as illustrated in the Table 3 below. The object detection sensor 120, such as an ADS-B sensor, typically generates the Mode S ID for traffic aircraft. The aircraft ground collision avoidance system 102 is configured to decode the Mode S ID from the ADS-B message and use the Mode S ID to find the corresponding aircraft type using the look up table, such as for example, Table 3. The aircraft ground collision avoidance system 102 is configured to use the aircraft type for the traffic aircraft with the aircraft look up table, such as for example Table 2, to identify the aircraft length and wingspan information for the traffic aircraft. If the aircraft ground collision avoidance system 102 cannot not find the aircraft type for a Mode S ID, the aircraft ground collision avoidance system 102 decodes traffic aircraft size including both aircraft length and wingspan information. However, the aircraft length and wingspan information is not always received from an ADS-B sensor. Since these two parameters are optional and they are in many cases not transmitted in an ADS-B message.

**Table 3: Mode S ID Associate to Aircraft Type**

| Mode S ID | Aircraft Type |
|---|---|
| ID_1 | Type A |
| ID_2 | Type B |
| ID_3 | Type A |
| ...... | ...... |
| ID_n | Type E |

When the object detection sensor 120 does not provide the aircraft length and wingspan information for traffic aircraft and when the Mode S ID is not obtained from the object detection sensor 120, the traffic aircraft size may be estimated by tracking the path of the traffic aircraft.

According to International Civil Aviation Organization (ICAO) documents, each taxiway at an airport is designed to a different category, and each category has the minimum width for taxiway pavement area as shown in the Table 4 below. For example, the taxiway of category D has a minimum width of 23 meters.

**Table 4: Design Criteria for Taxiway**

| Code letter | | | | | | | |
|---|---|---|---|---|---|---|---|
| Physical characteristics | | A | B | C | D | E | F |
| Minimum width of: | | | | | | | |
| | taxiway pavement | 7.5 m | 10.5 m | 18 m^{a} | 23 m^{c} | 23 m | 25 m |
| | | | | 15 m^{b} | 18 m^{d} | | |
| | taxiway pavement and shoulder | - | - | 25 m | 38 m | 44 m | 60 m |
| | taxiway strip | 32.5 m | 43 m | 52 m | 81 m | 95 m | 115 m |
| | graded portion of taxiway strip | 22 m | 25 m | 25 m | 38 m | 44 m | 60 m |
| Minimum clearance distance of outer main wheel to taxiway edge | | 1.5 m | 225 m | 4.5 m^{a} | 4.5 m | 4.5 m | 4.5 m |
| | | | | 3 m^{b} | | | |

Each taxiway category has an associated wingspan range as shown in Table 5 below. For example, a Code D taxiway allows aircraft with wingspan less than 52 meters to taxi.

**Table 5: Wingspan associated to Taxiway code**

| Code element 1 | | | Code element 2 | |
|---|---|---|---|---|
| Code number | Aeroplane reference field length | Code letter | Wing span | Outer main gear wheel span^{a} |
| 1 | Less than 800 m | A. | Up to but not including 15 m | Up to but not including 4.5 m |
| 2 | 800 m up to but not including 1 200 m | B | 15 m up to but not including 24 m | 4.5 m up to but not including 6 m |
| 3 | 1 200 m up to but not including 1 800 m | C | 24 m up to but not including 36 m | 6 m up to but not including 9 m |
| 4 | 1 800 m and over | a | 36 m up to but not including 52 m | 9 m up to but not including 14 m |
| | | E | 52 m up to but not including 65 m | 9 m up to but not including 14 m |
| | | F | 65 m up to but not including 80 m | 14 m up to but not including 16 m |
| a. Distance between the outside edges of the main gear wheels. | | | | |

When the traffic aircraft size is not provided by the object detection sensor 120, the aircraft ground collision avoidance system 102 can track all the taxiways on which the specific traffic aircraft has passed, and the aircraft ground collision avoidance system 102 can leverage airport database polygon area to calculate taxiway width as illustrated in FIG. 7. FIG. 7 is a diagrammatic representation of an exemplary airport database polygon area used to calculate taxiway width, in accordance with at least one embodiment.

The aircraft ground collision avoidance system 102 selects the minimum value from all calculated taxiway widths and checks against the taxiway design criteria Table 3 to find the taxiway category. For example, the minimum width 702 in all tracked taxiways is 20 meters as shown in FIG. 7, as per the taxiway design criteria Table 4, the taxiway is in Code C (18<20<23). By checking Table 5, the maximum allowed wingspan is less than 36 meters. Thus, both the wingspan and aircraft length are estimated to be 36 meters for the specific traffic aircraft. In this case, even though the estimated aircraft size is not as accurate as the actual size, but compared with using the maximum wingspan, using the estimated aircraft size is helpful for reducing the size of the protection zone, which in turn can reduce the number of nuisance potential collision alerts.

Referring back to FIG. 2 at 216, the aircraft ground collision avoidance system 102 makes maneuver path predictions for the aircraft protection zones for the aircraft 100 and the obstacle aircraft. The maneuver path predictions involve predicting the next position of the aircraft protection zones for each of the aircraft 100 and the obstacle aircraft based on aircraft position measurements and position filtering. As discussed above with regard to position filtering, for each measured aircraft position, if the distance to the guideline is less than the threshold distance, the aircraft ground collision avoidance system 102 projects the measured aircraft position onto the guideline.

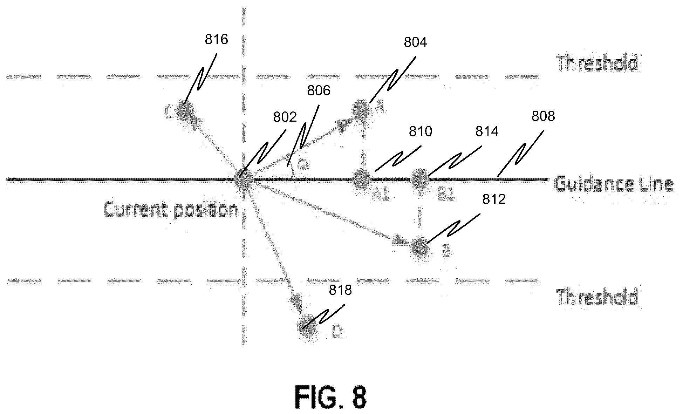

Referring to FIG. 8, a diagrammatic representation of an exemplary implementation of position filtering when projecting a measured aircraft position onto a guideline 808 while making maneuver path predictions in accordance with at least one embodiment is shown. In this example, the current aircraft position point 802 is the projection location of a measured aircraft position after position filtering, point A 804 is the next consecutive measured aircraft position as the aircraft 100 moves along a taxiway, and Φ 806 is the moving directional angle. When the distance to the guideline 808 is less than the threshold distance and Φ <= 90 degrees, the next consecutive measured aircraft position will be projected onto the guideline 808. For example, point A 804 would be projected to A1 810, and point B 812 would be projected to B1 814. The aircraft ground collision avoidance system 102 treats the next projected aircraft position as the current aircraft position and continues to predict the future aircraft position. When Φ > 90 degrees, for example as with aircraft position C 816, aircraft position C 816 is discarded by the aircraft ground collision avoidance system 102 since the aircraft 100 cannot move backward, and the aircraft ground collision avoidance system 102 continues to use the current aircraft position 802 to predict the next aircraft position. When the distance to the guideline 808 is greater than the threshold distance, for example as with position D 818, the aircraft ground collision avoidance system 102 does not project the aircraft position onto the guideline 808 and instead uses the aircraft position D 818 as the current aircraft position to predict the next aircraft position. Guidelines may also be referred to as guidance lines.

Referring back to FIG. 2 at 218, upon a determination by the aircraft ground collision avoidance system 102 that there is an intersection between the predicted airport travel path of the aircraft 100 and a position of an obstacle, the aircraft ground collision avoidance system 102 generates a potential collision alert for display on a display device 112 of the aircraft 100. The intersection between the predicted airport travel path of the aircraft 100 and a position of an obstacle defines a potential collision point between the aircraft 100 and the obstacle.

In at least one embodiment, when the obstacle is a static obstacle, the aircraft ground collision avoidance system 102 generates the position of the obstacle based on coordinate data associated with the static obstacle from the airport map database 110. If the aircraft ground collision avoidance system 102 determines that there is an intersection between a future position of the aircraft 100 along the predicted airport travel pathway of the aircraft 100 and the position of the obstacle, the aircraft ground collision avoidance system 102 generates a potential collision alert for display on a display device 112 of the aircraft 100.

In at least one embodiment, when the obstacle is a dynamic obstacle, the aircraft ground collision avoidance system 102 identifies the current obstacle position, the obstacle speed, and the obstacle heading of the dynamic obstacle. The aircraft ground collision avoidance system 102 receives the taxi route data for the dynamic obstacle. The aircraft ground collision avoidance system 102 predicts the airport travel pathway of the dynamic obstacle based on the current obstacle position, the obstacle speed, the obstacle heading, and the taxi route data for the dynamic obstacle. If the aircraft ground collision avoidance system 102 determines that there is an intersection between an estimated future position of the aircraft 100 along the predicted airport travel pathway of the aircraft 100 and an estimated future position of the dynamic obstacle along the predicted airport travel pathway of the dynamic obstacle, the aircraft ground collision avoidance system 102 generates a potential collision alert for display on a display device 112 of the aircraft 100.

In at least one embodiment, the estimated future position of the aircraft 100 is based on the aircraft speed, the travel time of the aircraft 100 to the estimated future position at the intersection and at least one of a pilot reaction time, braking distance of the aircraft, and the travel time to the intersection. For example, a pilot reaction time may be set as a predefined constant value (*e.g.,* 2 seconds). An example computation for the distance to the intersection (potential collision point) = <Pilot Reaction Time> * <Ground Speed> + Braking Distance.

In at least one embodiment, when the obstacle is another aircraft (obstacle aircraft), the aircraft ground collision avoidance system 102 receives the current obstacle position, the obstacle speed, and the obstacle heading of the obstacle aircraft from the aircraft sensor system. The aircraft ground collision avoidance system 102 receives the taxi route data for the obstacle aircraft from ATC via the communication system 122. The aircraft ground collision avoidance system 102 predicts the airport travel pathway of the obstacle aircraft based on the current obstacle position, the obstacle speed, the obstacle heading, and the taxi route data for the obstacle aircraft. If the aircraft ground collision avoidance system 102 determines that there is an intersection between a future position of the aircraft 100 along the predicted travel pathway of the aircraft 100 and a future position of the obstacle aircraft along the predicted airport travel pathway of the obstacle aircraft, the aircraft ground collision avoidance system 102 generates a potential collision alert for display on a display device 112 of the aircraft 100.

In at least one embodiment, the aircraft ground collision avoidance system 102 generates an aircraft protection zone around positions of the aircraft 100. Estimating a series of future positions of the aircraft 100 includes estimating a series of future positions for aircraft protection zone around the current aircraft position and the future aircraft positions. The aircraft ground collision avoidance system 102 determines whether there is the intersection between the predicted airport travel pathway of the aircraft 100 and the position of the obstacle, by determining whether there is an intersection between one of the series of the future positions of the aircraft protection zone and the position of the obstacle.

In at least one embodiment, the aircraft ground collision avoidance system 102 generates an aircraft protection zone around positions of another aircraft (obstacle aircraft). The aircraft ground collision avoidance system 102 estimates the series of future positions of the obstacle aircraft by estimating a series of future positions for the aircraft protection zone around the current obstacle aircraft position and the future obstacle aircraft positions. The position of the obstacle is defined as one of the series of the future positions of the aircraft protection zone of the obstacle aircraft. The aircraft ground collision avoidance system 102 determines whether there is the intersection between the predicted airport travel pathway of the aircraft 100 and the position of the obstacle, by determining whether there is an intersection between one of the series of the future positions of the aircraft protection zone of the aircraft 100 and one of the series of the future positions of the aircraft protection zone of the obstacle aircraft.

In various embodiments, the aircraft ground collision avoidance system 102 is configured to determine whether an actual airport travel path of the aircraft 100 deviated from the predicted airport travel path of the aircraft 100. If the aircraft ground collision avoidance system 102 determines that the actual airport travel path of the aircraft 100 deviated from the predicted airport travel path of the aircraft 100, the aircraft ground collision avoidance system 102 is configured to generate a deviation from airport travel path alert.

In various embodiments, the aircraft ground collision avoidance system 102 is configured to determine whether an actual position of the obstacle deviated from the predicted position of the obstacle. If the aircraft ground collision avoidance system 102 determines that the actual position of the obstacle deviated from the predicted position of the obstacle, the aircraft ground collision avoidance system 102 is configured to generate a deviation of obstacle position alert.

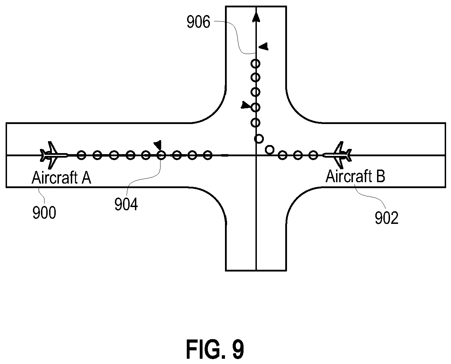

Referring to FIG. 9, a diagrammatic representation of exemplary predicted positions of aircraft A 900 and aircraft B 902 along associated airport travel pathways 904, 906 where there is no risk of a potential collision between aircraft A 900 and aircraft B 902 in accordance with at least one embodiment is shown. The current aircraft position and predicted future positions of aircraft A 900 are shown along the predicted airport travel pathway 904 for aircraft A 900. The predicted airport travel pathway 904 for aircraft A 900 is based on taxi route data for aircraft A 900. The current aircraft position and predicted future positions of aircraft B 902 are shown along a predicted airport travel pathway 906 for aircraft B 902. The predicted airport travel pathway 906 for aircraft B 902 is based on taxi route data for aircraft B 902.

An assessment based solely on the heading and the ground speed of aircraft A 900 and aircraft B 902 would lead to a prediction of a potential collision risk between aircraft A 900 and aircraft B 902 and a nuisance potential collision alert would be generated. However, an assessment based on the heading, the ground speed, and the predicted airport travel pathway 904 of aircraft A 900 and the heading, the ground speed, and the predicted airport travel pathway 906 of aircraft B 902 indicates that there is no potential collision risk between aircraft A 900 and aircraft B 902. Accordingly, a potential collision alert would not be generated.

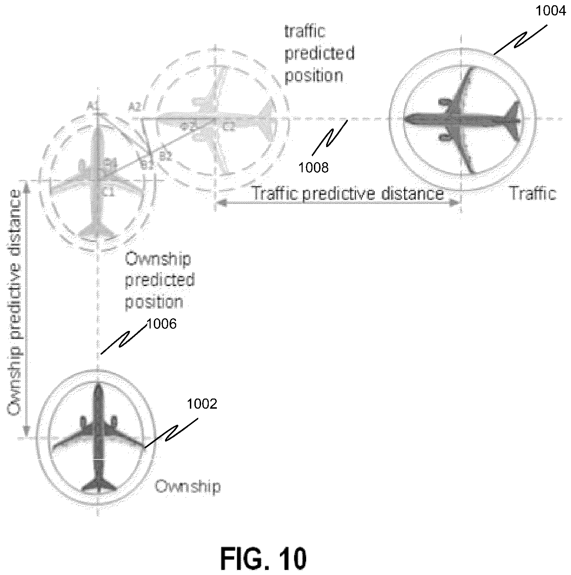

Referring to FIG. 10, a diagrammatic representation of exemplary predicted positions of an aircraft 1002 and a traffic aircraft (obstacle aircraft) 1004 along associated predicted airport travel pathways 1006, 1008 where there is a risk of a potential collision in accordance with at least one embodiment is shown. The aircraft ground collision avoidance system 102 is configured to determine whether a future position of an aircraft protection zone of the aircraft 1002 along a predicted airport travel pathway 1006 of the aircraft 1002 intersects with a future position of an aircraft protection zone of a traffic aircraft (obstacle aircraft) 1004 along a predicted airport travel pathway 1008 of the traffic aircraft 1004. In this example, aircraft ground collision avoidance system 102 has determined that there is an intersection between a future position of the aircraft protection zone of the aircraft 1002 along the predicted airport travel pathway 1006 of the aircraft 1002 and a future position of the aircraft protection zone of the traffic aircraft (obstacle aircraft) 1004 along the predicted airport travel pathway 1008 of the traffic aircraft 1004. Accordingly, a potential collision alert would be generated. The predicted airport travel pathway 1006 of the aircraft 1002 is based on associated taxi route data and the predicted airport travel pathway 1008 of the aircraft 1004 is based on associated taxi route data.

Described herein are apparatus, systems, techniques and articles for an aircraft ground collision avoidance system. The apparatus, systems, techniques and articles provided herein can make use of an airport moving map database to correct aircraft and object position and/or path for predicting possible alert situations. The apparatus, systems, techniques and articles provided herein can make use of an airport moving map database to identify a potential nuisance alert event based on surface operation rules and airport geometry, so that, for example, two aircraft moving on two independent taxiways do not lead to an alert condition.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft ground collision avoidance system comprising:
an aircraft sensor system of a first aircraft configured to generate aircraft sensor data;
a communication system of the first aircraft;
a display device of the first aircraft; and
a controller of the first aircraft configured to be communicatively coupled to the sensor system, the communication system, and the display device, the controller being configured to:
generate a current first aircraft position, a current first aircraft speed, and a current first aircraft heading based on the aircraft sensor data received from the aircraft sensor system;
receive first taxi route data for the first aircraft from air traffic control (ATC) via the communication system;
predict a first airport travel pathway of the first aircraft based on the current first aircraft position, the current first aircraft speed, the current first aircraft heading, and the first taxi route data;
determine whether there is an intersection between the first airport travel pathway of the first aircraft and a position of an obstacle, the intersection defining a potential collision point; and
generate a potential collision alert for display on the display device based on the determination.

2. The system of claim 1, further comprising:
an airport map database configured to store coordinate data for a plurality of static obstacles on an airport ground surface, the plurality of static obstacles including a first static obstacle; and
wherein:
the obstacle is the first static obstacle; and
the controller is configured to generate the position of the obstacle based on the coordinate data associated with the first static obstacle retrieved from the airport map database.

3. The system of claim 1, wherein the obstacle is a dynamic obstacle and the controller is configured to:
identify a current obstacle position, a current obstacle speed, and a current obstacle heading of the dynamic obstacle;
receive second taxi route data for the dynamic obstacle;
predict a second airport travel pathway of the dynamic obstacle based on the current obstacle position, the current obstacle speed, the current obstacle heading, and the second taxi route data; and
determine whether there is the intersection between an estimated future position of the first aircraft along the first airport travel pathway of the first aircraft based at least on the current first aircraft speed and a travel time to the intersection and an obstacle position of the dynamic obstacle, the obstacle position of the dynamic obstacle being an estimated future position of the dynamic obstacle along the second airport travel pathway based on the current obstacle speed and the travel time and is the position of the obstacle.

4. The system of claim 3, wherein the estimated future position of the first aircraft is based on the current first aircraft speed, the travel time to the intersection and at least one of a pilot reaction time and a braking distance of the first aircraft.

5. The system of claim 1, further comprising an airport map database configured to store coordinate data of guidelines associated with a first taxi route, and wherein the controller is configured to:
retrieve the coordinate data of the guidelines associated with the first taxi route from the airport map database based on the received first taxi route data;
define a first guideline for the first taxi route based on the coordinate data of the guidelines associated with the first taxi route; and
refine the first airport travel pathway of the first aircraft by estimating a series of future positions of the first aircraft by:
estimating a next future position of the first aircraft based on a previously estimated position of the first aircraft, the current first aircraft speed, and the current first aircraft heading; and
adjusting the next estimated future position of the first aircraft to a nearest coordinate on the first guideline when the nearest coordinate is less than a first threshold distance away from the estimated next future position.

6. The system of claim 5, wherein the first threshold distance is based on statistics relating to historical aircraft taxi operation data along the first taxi route.

7. The system of claim 5, wherein the controller is configured to:
generate a first aircraft protection zone around positions of the first aircraft, wherein estimating the series of future positions of the first aircraft comprises estimating a series of future positions for the first aircraft protection zone around the current first aircraft position and the future first aircraft positions; and
determining whether there is the intersection between the first airport travel pathway of the first aircraft and the position of the obstacle, by determining whether there is an intersection between one of the series of the future positions of the first aircraft protection zone and the position of the obstacle.

8. The system of claim 1, wherein the obstacle is a second aircraft, and the controller is configured to:
receive a current obstacle position, a current obstacle speed, and a current obstacle heading of the second aircraft from the aircraft sensor system;
receive second taxi route data for the second aircraft from the ATC via the communication system;
predict a second travel pathway of the second aircraft based on the current obstacle position, the current obstacle speed, the current obstacle heading, and the second taxi route data; and
determine whether there is the intersection between an estimated future position of the first aircraft along the first predicted airport travel pathway based on the current first aircraft speed and a time to travel to the intersection and the obstacle position of the second aircraft, the obstacle position of the second aircraft being an estimated future position of the second aircraft along the second airport travel pathway based on the current obstacle speed and the travel time.

9. The system of claim 8, further comprising an airport map database configured to store coordinate data of guidelines associated with a second taxi route, and wherein the controller is configured to:
retrieve the coordinate data of the guidelines associated with the second taxi route from the airport map data base based on the received second taxi route data;
define a second guideline for the second taxi route based on the coordinate data of the guidelines associated with the second taxi route; and
predict the second airport travel pathway of the second aircraft by estimating a series of future positions of the second aircraft by:
estimating a next future position of the second aircraft based on a previously estimated position of the second aircraft, the current obstacle speed, and the current obstacle heading; and
adjusting the next estimated future position of the second aircraft to a nearest coordinate on the second guideline when the nearest coordinate is less than a second threshold distance away from the estimated next future position.

10. The system of claim 9, wherein the second threshold distance is based on statistics relating to historical aircraft taxi operation data along the second taxi route.

11. The system of claim 8, wherein the controller is configured to generate a second aircraft protection zone around positions of the second aircraft and wherein:
estimating the series of future positions of the second aircraft comprises estimating a series of future positions for the second aircraft protection zone around the current second aircraft position and the future second aircraft positions; and
the position of the obstacle is one of the series of the future positions of the second aircraft protection zone.

12. The system of claim 1, further comprising an airport map database configured to store coordinate data and an element identifier for each of a plurality of airport elements, and the controller is configured to:
receive a text message including the first taxi route data from the ATC via the communication system, the first taxi route data comprising at least two airport elements;
identify an element identifier for each of the at least two airport elements;
retrieve coordinate data associated with each of the at least two airport elements from the airport map database using the element identifiers for each of the at least two airport elements; and
generate the first taxi route based on the coordinate data associated with each of the at least two airport elements.

13. The system of claim 1, further comprising an airport map database configured to store coordinate data and an element identifier for each of a plurality of airport elements, and the controller is configured to:
receive an audio message including the first taxi route data from the ATC via the communication system, the first taxi route data comprising at least two airport elements;
transcribe the audio message into a text message;
identify an element identifier for each of the at least two airport elements in the text message;
retrieve coordinate data associated with each of the at least two airport elements from the airport map database using the element identifiers for each of the at least two airport elements; and
generate the first taxi route based on the coordinate data associated with each of the at least two airport elements.

14. The system of claim 1, wherein the controller is configured to:
determine whether an actual position of the obstacle deviated from the position of the obstacle; and
generate a deviation of obstacle position alert based on the determination.

15. A method of avoiding aircraft ground collision comprising:
generating a current first aircraft position, a current first aircraft speed, and a current first aircraft heading of a first aircraft based on aircraft sensor data received from an aircraft sensor system;
receiving first taxi route data for the first aircraft from air traffic control (ATC) via an aircraft communication system;
predicting a first airport travel pathway of the first aircraft based on the current first aircraft position, the current first aircraft speed, the current first aircraft heading, and the first taxi route data;
determining whether there is an intersection between the first airport travel pathway of the first aircraft and a position of an obstacle, the intersection defining a potential collision point; and
generating a potential collision alert for display on a display device of the first aircraft based on the determination.
